**Europäisches Patentamt**

**European Patent Office**

**Office européen des brevets**

(19)

(11) Veröffentlichungsnummer: **0 211 460 B1**

## EUROPÄISCHE PATENTSCHRIFT

(12)

(45) Veröffentlichungstag der Patentschrift: **10.06.92**

(21) Anmeldenummer: **86201270.5**

(22) Anmeldetag: **21.07.86**

(51) Int. Cl.5: **H04Q 7/04**, H04B 7/26, H04J 15/00

(54) **Digitales Funkübertragungsverfahren.**

(30) Priorität: **31.07.85 DE 3527331**

(43) Veröffentlichungstag der Anmeldung:
**25.02.87 Patentblatt 87/09**

(45) Bekanntmachung des Hinweises auf die
Patenterteilung:
**10.06.92 Patentblatt 92/24**

(84) Benannte Vertragsstaaten:
**AT BE CH DE FR GB IT LI NL SE**

(56) Entgegenhaltungen:
**EP-A- 0 064 686**
**EP-A- 0 196 723**

**IEEE TRANSACTIONS ON COMMUNICATION TECHNOLOGY, Band COM-15, Nr. 5, Oktober 1967, Seiten 724-725, New York, US; J.H. WITTMAN: "Categorization of multiple-access/random-access modulation techniques"**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**BE CH FR GB IT LI NL SE AT**

(72) Erfinder: **Eizenhöfer, Alfons, Dr.-Ing.**
**Feuerweg 7a**
**W-8503 Altdorf(DE)**
Erfinder: **Preller, Hans-Georg, Dr.-Ing.**
**Gartenstrasse 22**
**W-8521 Grossenseebach(DE)**

(74) Vertreter: **Peuckert, Hermann, Dipl.-Ing. et al**
**Philips Patentverwaltung GmbH Wendenstrasse 35 Postfach 10 51 49**
**W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

IEEE TRANSACTIONS ON VEHICULAR TECH-
NOLOGY, Band VT-31, Nr. 4, November 1982,
Seiten 153-157, IEEE, New York, US; K. KI-
NOSHITA et al.: "Digital mobile telephone
system using TD/FDMA scheme"

IEEE TRANSACTIONS ON VEHICULAR TECH-
NOLOGY, Band VT-32, Nr. 1, Februar 1983,
Seiten 98-105, IEEE, New York, US; O.-C. YUE:
"Spread spectrum mobile radio, 1977-1982"

IEEE INTERNATIONAL CONFERENCE ON
COMMUNICATIONS, Toronto, 22.-25. Juni
1986, Band 1, Seiten 83-89, IEEE, New York,
US; W. FUHRMANN et al.: "Standardization of
an european digital mobile radiocommunication system"

## Beschreibung

Die Erfindung betrifft ein digitales Funkübertragungssystem gemäß dem Oberbegriff des Patentanspruchs 1.

Zur Nachrichtenübertragung über ein von einer Vielzahl von Teilnehmern gemeinsam benutztes Übertragungsmedium (z.B. Leitung, Funkstrecke) sind drei Grundverfahren bekannt, nämlich das Codemultiplex-Verfahren, das Frequenz-multiplex-Verfahren und das Zeitmultiplex-Verfahren.

Beim Codemultiplex-Verfahren werden beispielsweise die verschiedenen, über ein gemeinsames Übertragungsmedium geführten Nachrichten durch Basis-Modulation einem Träger aufmoduliert und das sich ergebende im Vergleich zur Kanalbandbreite schmalbandige Signal wird durch Multiplex-Modulation mit Hilfe eines den Empfänger kennzeichnenden Codeworts auf die Kanalbandbreite spektral gespreizt.

Die Erkennung des Signals erfolgt nicht durch zeitliche oder frequenzmäßige Selektion, sondern anhand der spektralen Codierung. Die im Codemultiplex-Kanal überlagerte Vielzahl von spektralcodierten Nachrichten werden im Empfänger anhand des diesem zugeordneten Codeworts selektiert.

Beim Frequenzmultiplex-Verfahren wird die zur Nachrichtenübertragung zur Verfügung stehende Gesamtbandbreite in schmale Frequenzbänder unterteilt, welche jeweils einem Nachrichtenübertragungskanal entsprechen. Für die Dauer der Funkübertragung steht dem Teilnehmer ein solches schmales Frequenzband zur Verfügung.

Beim Zeitmultiplex-Verfahren steht jedem Teilnehmer die gesamte Bandbreite eines einzigen Funkkanals zur Verfügung, welchen der Teilnehmer aber nur für kurze Zeitabschnitte benutzen darf. Die Zeichen oder Zeichenfolgen verschiedener Teilnehmer sind ineinander verschachtelt und werden mit entsprechend höherer Bitrate im einzigen Funkkanal übertragen, wobei der jeweils einem Teilnehmer zugeordnete Zeitkanal sich periodisch mit der Rahmenperiodendauer wiederholt.

Aus der DE-OS 25 37 683 ist ein Funkübertragungssystem mit ortsfesten Funkstationen und beweglichen Funkstationen bekannt, bei welchen verschiedene Kanalzugriffsverfahren mit asynchronem Zeitmultiplex, mit Codemultiplex und mit Frequenzmultiplex verwendet werden.

Für die Codewort-Synchronisation wird eine inkohärente Trägerdemodulation verwendet. Ein Codegenerator erzeugt nacheinander je einen der neun verschiedenen Codes, die die ortsfesten Landfunkstellen kennzeichnen. Nachdem dieser Code mit dem Empfangssignal synchronisiert ist, wird das ZF-Signal damit multipliziert, wodurch das breite Spektrum in die Nachrichtenbandbreite transformiert wird. Anschließend kann die empfangene Nachricht beispielsweise mit einem DPSK-Demodulator zurückgewonnen werden. Für die Synchronisation wird ein eigenes Codemuster mit einer Länge von beispielsweise 15 Bit verwendet, welches der Nachricht vorangestellt ist.

Auch Kombinationen der vorgenannten Verfahren und deren Anwendung in einem digitalen Funkübertragungssystem sind bekannt. Beispielsweise ist in "Nachrichtentechnik, Elektronik + Telematic 38 (1984), Heft 7, Seiten 264 bis 268" ein digitales Funkübertragungssystem beschrieben, bei dem das Zeitmultiplex-Verfahren in Kombination mit Codespreizung verwendet wird, wobei jedoch keine Trennung verschiedener Teilnehmer unter Anwendung des Codemultiplexverfahrens erfolgt. In den Zeitkanälen zur Sprach-und/oder Datenübertragung (Kommunikationskanal TCH) werden nacheinander eine Bit-Folge zur Ermittlung des Bit-Takts (Synchron), ein Rahmen-Synchronisationswort (Vorspann) und die Bit-Folge der Nachricht selbst übertragen. Die Zeitkanäle zur Nachrichtenübertragung (3x20 TCH) sind mit Organisationskanälen (3 CCH) zu einem Zeitmultiplexrahmen mit der Zeitdauer 31,5 msec. angeordnet. Soll als Nachricht das Sprachsignal übertragen werden, so kann zur Analog-/Digitalwandlung die adaptive Deltamodulation verwendet werden. Die dabei entstehenden Nachrichtenzeichen (Bit) werden im Sender mit einem Code überlagert. Es hat sich als vorteilhaft erwiesen, die enzelnen Nachrichtenzeichen in Blöcke zu je vier Bit zusammen zu fassen und die so entstehenden Blöcke mit einem orthogonalen Alphabet zu spreizen. Der dabei verwendete Spreizfaktor ist ein Kompromiß, um die Vorteile der Bandspreizung mit der Forderung nach Frequenzökonomie miteinander zu vereinigen.

Weiterhin ist ein Nachrichtenübertragungsverfahren vorgeschlagen worden DE-A-3 447 107 entsprechend du europäischen Anmeldung EP-A-0 188 836, bei dem in Hin- und Rückrichtung des Nachrichtenübertragungskanals jeweils ein anderes Modulationsverfahren angewandt wird. Zur Nachrichtenübertragung greifen die beweglichen Funkstationen auf einen aus einer Vielzahl von Nachrichtenkanälen zu. In der Richtung von der ortsfesten Funkstation zu den dieser zugeordneten beweglichen Funkstationen ist jeder Nachrichtenkanal durch Spreizmodulation gespreizt.

Die gespreizten Nachrichtenkanäle werden einander überlagert und das dadurch erhaltene breitbandige Summensignal wird in einem gemeinsamen Frequenzband übertragen. In der Richtung von den beweglichen Funkstationen zu der ortsfesten Funkstation erfolgt die Nachrichtenübertragung in voneinander getrennten, schmalbandigen Frequenzkanälen.

Für die Sprachübertragung, in der Richtung von der ortsfesten Funkstation zu den beweglichen Funkstationen, wird die verwendete Spreizmodulation von der ortsfesten Funkstation ausgewählt und beim Verbindungsaufbau der beweglichen Funkstation mitgeteilt. Für die Übertragung von Signalisierungen an die der ortsfesten Funkstation zugeordneten beweglichen Funkstationen, wird in der Richtung von der ortsfesten Funkstation zu den beweglichen Funkstationen, eine für alle beweglichen Funkstationen gemeinsame Spreizmodulation verwendet.

Zur Unterscheidung von in benachbarten Funkzellen angeordneten ortsfesten Funkstationen senden diese, in Richtung von der ortsfesten Funkstation zu den beweglichen Funkstationen, in unterschiedlichen Frequenzbändern. In den ortsfesten Funkstationen sind Schmalband-Empfänger angeordnet, welche während des Betriebs auf mehrere Frequenzkanäle umschaltbar sind. Die Zahl der in der beweglichen Funkstation schaltbaren Sendefrequenzen ist geringer als die Zahl der in der ortsfesten Funkstation schaltbaren Empfangsfrequenzen. Beispielsweise kann in der ortsfesten Funkstation eine Umschaltung auf 1.000 Frequenzen und in der beweglichen Funkstation eine Umschaltung auf 40 Frequenzen vorgenommen werden.

Um die Interferenzsituation günstig zu beeinflussen, werden in jeder ortsfesten Funkstation die dort verwendeten Empfangsfrequenzen verwaltet. Bei Empfangsstörungen wird die betroffene Verbindung, in Richtung von der beweglichen Funkstation zu der ortsfesten Funkstation, auf einen anderen nicht gestörten Frequenzkanal, auf welchen sowohl die ortsfeste Funkstation als auch die bewegliche Funkstation umschalten kann, umgeschaltet. Die Empfangseinrichtung in der ortsfesten Funkstation zum Drahtnetz des öffentlichen Fernsprechsystems hin bleibt weiterhin an der Verbindung beteiligt.

Der Erfindung liegt die Aufgabe zugrunde, in einem digitalen Funkübertragungssystem die Bildung von Nachrichtenkanälen derart vorzunehmen, daß eine Anpassung an inhomogene Verkehrsdichten und eine kostengünstige Realisierung für den Sender in der ortsfesten Funkstation und den Empfänger in der beweglichen Funkstation erreicht wird.

Diese Aufgabe wird erfindungsgemäß bei einem digitalen Funkübertragungssystem mit den Merkmalen des Patentanspruchs 1 gelöst.

Durch die Anwendung der Spreizmodulation in der Übertragungsrichtung von der ortsfesten Funkstation zu den beweglichen Funkstationen lassen sich Mehrwege auflösen und auswerten und Interferenzen weitgehend vermeiden. Werden in den verschiedenen Funkzellen des digitalen Funkübertragungssystems verschiedene Codes und das gleiche Frequenzband verwendet (Trennung der Nachrichtenkanäle in den Funkzellen eines Clusters durch Codemultiplex) so kann die gleiche Frequenz in der Zellstruktur öfter wiederholt werden als bei einem reinen Frequenzmultiplexsystem. Dadurch wird das Übertragungsverfahren frequenzökonomischer.

Durch die Verwendung von verschiedenen Codes in den Funkzellen eines Clusters (Trennung der Nachrichtenkanäle von beweglichen Funkstationen innerhalb der gleichen Funkzelle durch Codemultiplex) werden innerhalb einer Funkzelle zusätzliche Nachrichtenkanäle zur Verfügung gestellt.

Durch die Verwendung von verschiedenen Frequenzbändern mit einer für die Funknetzplanung geeigneten Bandbreite (Flexiblität) sowohl in benachbarten Funkzellen als auch innerhalb einer Funkzelle kann beim erfindungsgemäßen digitalen Funkübertragungssystem eine gute Anpassung an inhomogene Verkehrsdichten vorgenommen werden. Dies erfolgt zum einen durch die Bildung von großen Funkzellen bei niedrigen Verkehrsdichten und kleinen Funkzellen bei hohen Verkehrsdichten und zum anderen durch die Belegung von mehreren Frequenzbändern innerhalb einer Funkzelle mit hoher Verkehrsdichte. Durch die Anwendung dieses Frequenzmultiplexverfahrens (Kanalsätze) wird ein einfacher Übergang von großen auf kleine Funkzellen ermöglicht. In Funkzellen mit sehr hoher Verkehrsdichte können unter Anwendung des Frequenzmultiplexverfahrens mehrere Kanalsätze (Nachrichtenkanäle mit gleichem Codesatz) betrieben werden, so daß sich die Bildung von Kleinstzellen vermeiden läßt.

Unter Anwendung des Zeitmultiplexverfahrens können in jeder Codeebene zusätzliche Nachrichtenkanäle geschaffen werden, so daß die Übergungskapazität im digitalen Funkübertragungssystem weiter erhöht werden kann. Dadurch können Sendeeinrichtungen in der ortsfesten Funkstation im Vergleich zu einem reinen Frequenzmultiplexsystem gespart werden.

In den beiden Übertragungsrichtung des digitalen Funkübertragungssystems wird für die Bündelung von Nachrichtenkanälen unterschiedliche Kombinationen von Multiplexverfahren angewandt. Die Einfügung der zu sendenden Nachricht in die Nachrichtenkanäle unter Anwendung der Kombination von Codemultiplex-, Zeitmultiplex- und Frequenzmultiplexverfahren ist auch bei einem Übertragungssystem anwendbar, bei dem nur in eine Richtung gesendet wird. Durch die Anwendung des Codemultiplexverfahrens wird ein frequenzökonomisches Übertragungssystem dann erhalten, wenn die Signale alle synchron und mit gleicher Leistung beim Empfänger eintreffen, was beim Mobilfunk in der Richtung von ortsfester Funkstation zu jeder einzelnen beweglichen Funkstation gegeben ist.

Die Bildung der Nachrichtenkanäle in einem digitalen Funkübertragungssystem wird im folgenden anhand in der Zeichnung dargestellter Ausführungsformen näher beschrieben und erläutert. Es zeigt:

Fig. 1     die Multiplexbildung innerhalb einer Funkzelle

Fig. 2     die Frequenzwiederholung in der Zellstruktur bei drei verschiedenen Codesätzen,

Fig. 3     die Frequenzwiederholung in der Zellstruktur bei vier verschiedenen Codesätzen,

Fig. 4     das Blockschaltbild des Sendeteils der ortsfesten Funkstation und

Fig. 5     das Blockschaltbild des Empfangsteils in der beweglichen Funkstation.

Im digitalen Funkübertragungssystem sind ortsfeste Funkstationen BS räumlich nach einem Zellensystem angeordnet. Jeder ortsfesten Funkstation BS sind eine Anzahl von Funkübertragungskanälen zugeordnet, über welche Nachrichten zu beweglichen Funkstationen MS übertragen werden.

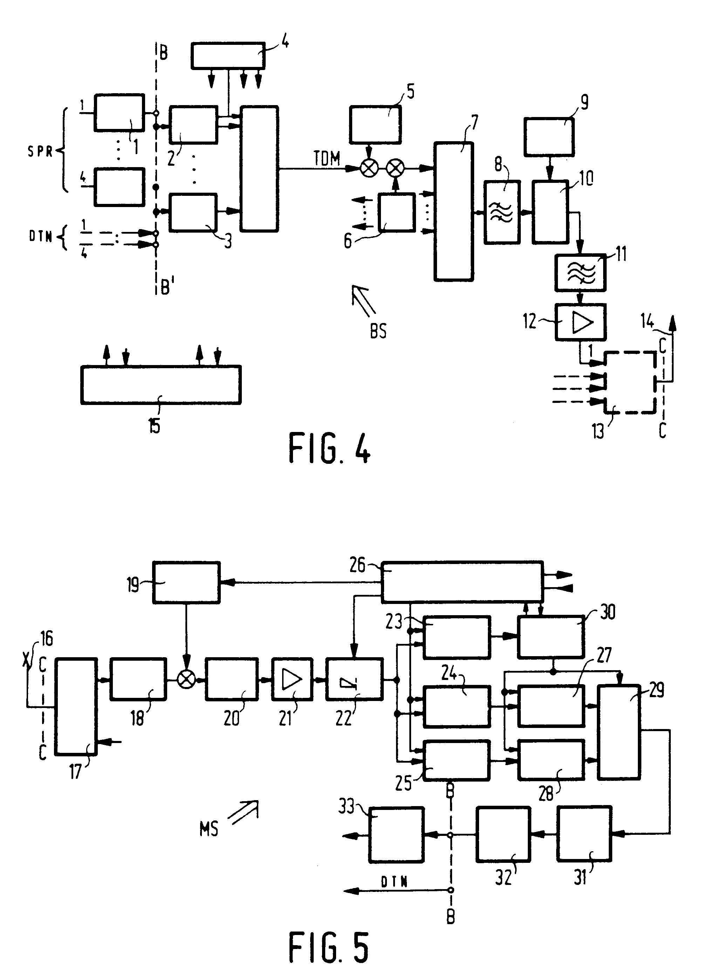

In den beiden Übertragungsrichtungen werden für die Bündelung von Nachrichtenkanälen unterschiedliche Kombinationen von Multiplexverfahren angewandt. In der Übertragungsrichtung von der ortsfesten Funkstation BS zu den beweglichen Funkstationen MS wird die zu sendende Nachricht (Sprache oder Daten) in die Nachrichtenkanäle unter Anwendung von Codemultiplex-, Zeitmultiplex- und Frequenzmultiplexverfahren eingefügt. Hierzu sind in der ortsfesten Funkstation BS unter anderem ein TDM-Multiplexer 3, ein Codewortgenerator 5 und ein Synthesizer 9 angeordnet (vgl. Fig. 4). In der beweglichen Funkstation MS erfolgt die Trennung der Nachrichtenkanäle des empfangenen Digitalsignals unter Anwendung des Codemultiplex-, Zeitmultiplex- und Frequenzmultiplexverfahrens. Hierzu sind in der beweglichen Funkstation MS unter anderem ein Synthesizer 19, Korrelatoren 24 und 25 und ein TDM-Demultiplexer 31 (vgl. Fig. 5) vorgesehen. Für die Übertragungsrichtung von den beweglichen Funkstationen MS zur ortsfesten Funkstation BS erfolgt die Nachrichtenübertragung in voneinander getrennten, schmalbandigen Frequenzkanälen. Im folgenden wird die Multiplexbildung für die Übertragungsrichtung von der ortsfesten Funkstation BS zu den beweglichen Funkstationen MS näher beschrieben und erläutert.

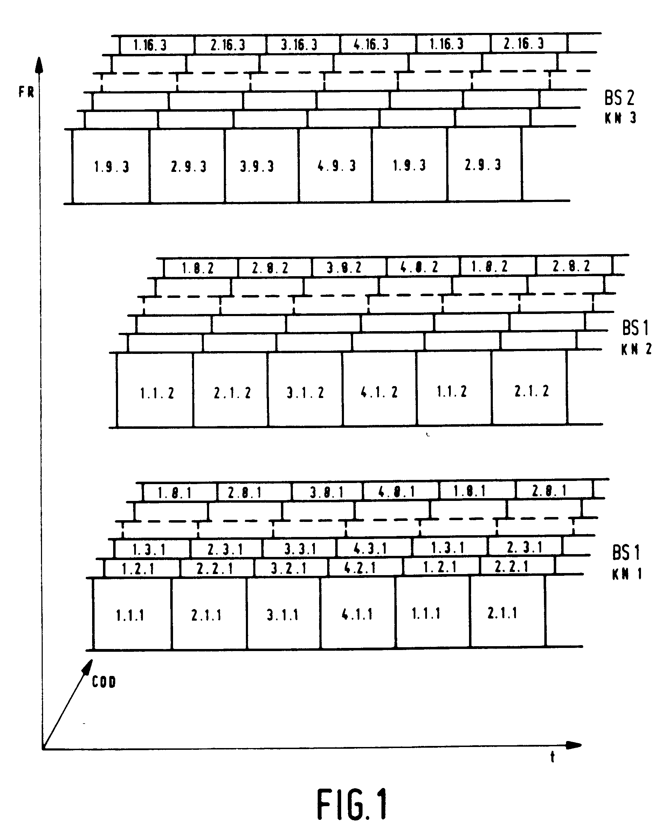

Eine ortsfeste Funkstation BS weist beispielsweise mindestens einen Kanalsatz, bestehend aus 32 Nachrichtenkanälen, auf. Die einzelnen Nachrichtenkanäle für die verschiedenen beweglichen Funkstationen MS in einem Kanalsatz sind durch verschiedene Spreizcodewörter (CDMA) und/oder verschiedene Zeitschlitze (TDMA) voneinander getrennt. In Fig. 1 sind drei solcher Kanalsätze dargestellt, wobei in dem gezeigten Beispiel Kanalsätze 1 und 2 zur gleichen Funkzelle und Kanalsatz 3 zu einer benachbarten Funkzelle gehören. Die Kennzeichnung der einzelnen Nachrichtenkanäle (Kanalkennung) ist in Fig. 1 durch die Zahlenfolge mit drei Ziffern verdeutlicht. Dabei bedeutet die erste Ziffer die Nummer des jeweiligen Zeitschlitzes, die zweite Ziffer das jeweils verwendete Codewort und die dritte Ziffer die jeweilige Nummer der verwendeten Trägerfrequenz. Die Bündelung der Nachrichtenkanäle in der Übertragungsrichtung von der ortsfesten Funkstation BS zu den beweglichen Funkstationen MS erfolgt durch die Aufeinanderfolge des Zeitmultiplex-, Codemultiplex- und schließlich Frequenzmultiplexverfahrens. Diese bevorzugte Aufeinanderfolge erleichtert die Realisierung der Sende-und Empfangseinrichtungen des digitalen Funkübertragungssystems.

Der Aufbau eines Kanalsatzes erfolgt z.B. dadurch, daß mehrere Zeitschlitze, von denen jeder die Information für jeweils einen Teilnehmer beinhaltet, zu einem Zeitmultiplexrahmen zusammengefaßt werden. In Fig. 1 umfaßt der Zeitmultiplexrahmen vier Zeitschlitze, z.B. Nachrichtenkanal 1.1.1 bis 4.1.1.

Anschließend wird die Information solcher Zeitmultiplexrahmen mit geeignet gewählten Codewörtern gespreizt, welche es erlauben, mehrere Zeitmultiplexrahmen gleichzeitig und mit derselben Trägerfrequenz zu übertragen. Dabei erfolgt die Spreizung jedes dieser Zeitmultiplexrahmen mit einem Codewort, welches in diesem Kanalsatz nur diesem speziellen Zeitmultiplexrahmen zugeordnet ist.Das bedeutet zum einen, daß innerhalb eines Kanalsatzes jeder Zeitmultiplexrahmen für die Spreizung ein für ihn spezifisches und von den anderen Zeitmultiplexrahmen unterschiedliches Codewort enthält und zum anderen, daß die Information in den Zeitschlitzen eines Zeitmultiplexrahmens mit dem gleichen Codewort gespreizt wird.

Bei der in Fig. 1 dargestellten Ausführungsform werden acht verschiedene Codewörter pro Kanalsatz verwendet, d.h. ein Kanalsatz enthält 8 verschieden Zeitmultiplexrahmen mit jeweils 4 Zeitkanälen, zusammen also 32 Nachrichtenkanäle pro Kanalsatz.

Durch die Vergabe von ausgesuchten Codesymbolen für die Spreizung, wie z.B. pseudozufällige, orthogonale oder quasiorthogonale Codewörter, ist die gleichzeitige Übertragung von Nachrichten im Codemultiplex möglich. Die 8 individuellen Spreizcodes weisen eine Spreizung von 31, d.h. eine Länge von 31 Chips, auf. Dabei werden alle Codemultiplex-Kanäle von dem Sender der ortsfesten Funkstation BS mit gleicher Leistung und zeitsynchron gesendet. Durch die Verwendung von vier Symbolen in jedem Codemultiplex-Kanal (die vier Symbole lassen sich z.B. durch zwei antipodale Codewörter darstellen) lassen sich zwei Bit des Nutzsignals zu einem Symbol zusammenfassen.

Dadurch verringert sich die Symbolrate gegenüber der Bitrate des Basisband um die Hälfte. Für die Codierung des Basisbandsignals und der Synchronisierung stehen sechs verschiedene Symbole zur Verfügung, von denen zwei ausschließlich für die Synchronisation verwendet werden. Werden acht indviduelle Spreizcodeebenen mit vier zeitlich gestaffelten Kanälen gebildet, so können 32 Nachrichtenkanäle von beispielsweise 16 kbit/s übertragen werden, welche nach Codespreizung einem gemeinsamen HF-Träger aufmoduliert werden. Bei Anwendung einer 4-Phasenmodulation ergibt sich für die Übertragung von 32 Nachrichtenkanälen z.B. eine Bandbreite von 1,25 MHz. Die Zeitstaffelung und damit die Zahl der Nachrichtenkanäle pro Spreizcodeebene hängt von der für jeden Nachrichtenübertragungskanal benötigten Bitrate ab.

Die beim erfindungsgemäßen digitalen Funkübertragungsverfahren stem vorgenommene Bündelung der Nachrichtenkanäle bringt eine Reihe von Vorteilen mit sich. Diese sind im einzelnen:

- Verringerung des Rayleigh-Fading-Einflußes
- Vermeidung von Symbolinterferenzen
- gute Frequenzökonomie
- flexible und leichte Anpassung an verschiedene Verkehrsdichten
- leichte Erweiterbarkeit des Systems
- Flexibilität in der reuse-Planung
- einfache Frequenzkoordination mit anderen Ländern oder Systemen.

Wegen der Zusammenfassung von je zwei Bit zu einem von vier möglichen Symbolen bleibt einerseits die Symboldauer mit 25 $\mu$s genügend lang um Intersymbolinterferenzen, die durch Mehrwegeempfang entstehen, zu vermeiden und andererseits ist der Aufwand in den Empfangseinrichtungen für die Korrelatoren niedrig. Die innerhalb einer ortsfesten Funkstation BS zur Trennung der Codeebenen benutzten 16 Spreizcodes sind beispielsweise paarweise orthogonal, während in verschiedenen ortsfesten Funkstationen BS mit gleichem Träger, die unterschiedlichen Synchronisiersymbole möglichst geringe Kreuzkorrelationsprodukte aufweisen sollen, bei beliebigen zeitlichen Verschiebungen.

Für die Spreizung können z.B. Gold-Codes verwendet werden. Eine Änderung des Spreizcodes hat nur geringen Einfluß auf die Empfangseinrichtung, da diese programmierbare Korrelatoren aufweist, welche von Verbindung zu Verbindung auf Anweisung des ortsfesten Funkstation BS neu eingestellt werden. Für die Übertragung solcher Einstellinformationen und zur Trennung der einzelnen Zeitkanäle (Nachrichtenkanäle) im Zeitmultiplexrahmen kann ein Organisationskanal vorgesehen sein.

Wie bereits ausgeführt, werden die Zeitmultiplexrahmen eines Kanalsatzes im Sender der ortfesten Funkstation BS einander überlagert, gemeinsam verstärkt und auf einem HF-Träger über eine Antenne abgestrahlt. Im Empfänger der beweglichen Funkstation MS wird das empfangene Digitalsignal ins Basisband gemischt. Dann wird in dem dieser beweglichen Funkstation beim Verbindungsaufbau zugewiesenen Zeitschlitz, die Information durch Korrelation mit dem für diesen Nachrichtenkanal verwendeteten Codewort, das der beweglichen Funkstation ebenfalls beim Verbindungsaufbau mitgeteilt wird, zurückgewonnen. Im Empfänger der beweglichen Funkstation MS erfolgt also die Trennung der Nachrichtenkanäle des empfangenen Digitalsignals in umgekehrter Abfolge, d.h. Demultiplexen bezüglich Frequenz, Code und Zeit, wie bei der Bündelung der Nachrichtenkanäle in der ortsfesten Funkstation BS. Bei einer Rahmenlänge von z.B. 20ms für den Zeitmultiplexrahmen, einer Symboldauer des Spreizcodeworts von 25 $\mu$s und einer Spreizung von 31 liegt die Chipdauer bei 0,806 ns und die Chiprate bei 1,24 Mcps. Damit ist auch die Chipdauer klein genug um eine hinreichende Auflösung und Ausnutzung der Mehrwege zu erlauben und Fading-Einflüsse weigehend zu vermeiden.

Wie bereits ausgeführt, is pro Kanalsatz mindestens ein Organisationskanal vorgesehen, auf dem die beweglichen Funkstationen MS zum Verbindungsaufbau zugreifen und über den der Verbindungsaufbau und einige Sonderdienste abgewickelt werden. Die beweglichen Funkstationen MS kennen die Frequenzlage der möglichen Kanalsätze, den entsprechenden Zeitkanal und die Codewörter für die innerhalb des digitalen Funkübertragungssystem vergebenen Organisationskanäle. Mit dieser Kenntnis kann die bewegliche Funkstation MS den für diese geeigneten Organisationskanal suchen und dort alle für den Zugriff (z.B. Frequenz der Schmalband-(Rück-)Richtung von beweglicher Funkstations MS zur ortsfesten Funkstation BS des jeweiligen Organisationskanals) und für den Verbindungsaufbau (z.B. Zeitkanal und Codewort für die Richtung von der ortsfesten Funkstation BS zur beweglichen Funkstation MS, sowie die Frequenz für die Schmalbandrichtung von der beweglichen Funkstation MS zu der ortsfesten Funkstation BS) benötigten Informationen empfangen.

Werden in einer ortsfesten Funkstation BS mehr als 32 Nachrichtenkanäle benötigt, so können mehrere Kanalsätze unter Anwendung des Frequenzmultiplexverfahrens einander überlagert werden. Die verschiedenen Kanalsätze werden mit unterschiedlichen HF-Trägerfrequenzen abgestrahlt. In Fig. 1 sind der ortsfesten Funkstation BS1 die Kanalsätze 1 und 2 zugeordnet. Für die beiden der ortsfesten Funkstation BS1 zugeordneten Kanalsätze können, weil sie auf verschiedenen Trägerfrequenzen gesendet werden, die gleichen Codewörter verwendet werden.

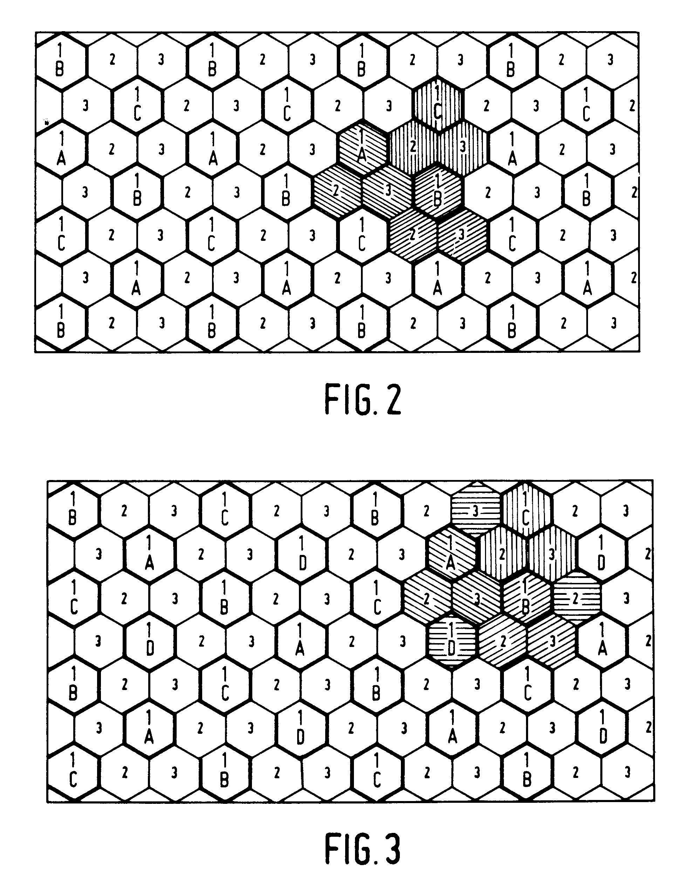

Die Trennung der Nachrichtenkanäle von benachbarten ortsfesten Funkstationen BS erfolgt entweder unter Anwendung des Frequenzmultiplexverfahrens (verschiedene HF-Träger für die in diesen ortsfesten Funkstationen BS verwendeten Kanalsätze), unter Anwendung des Codemultiplexverfahrens (verschiedene Codewortsätze bei den verwendeten Kanalsätzen) oder durch Kombinationen dieser beiden Multiplexverfahren. Bei der in Fig. 1 dargestellten Ausführungsform unterscheidet sich der Kanalsatz 3 der ortsfesten Funkstation BS2 von den beiden Kanalsätzen 1 und 2 der ortsfesten Funkstation BS1 sowohl im Codewortsatz (2. Ziffer der Kanalkennung) wie auch durch die verwendete HF-Trägerfrequenz (3. Ziffer der Kanalkennung). In genügend großen räumlichen Abständen (festgelegt durch auftretende Gleichkanalstörungen) von einer Zelle zur anderen kann ein in dieser Zelle eingesetzter Kanalsatz (HF-Träger und/oder Codewortsatz) wiederholt werden (vgl. Fig. 2 und 3). Dabei führt die Möglichkeit der Verwendung der gleichen HF-Trägerfrequenz in der entfernten Funkzelle und/oder unterschiedliche Codewortsätze zu benutzen, zu einer zusätzlichen Flexibilität und Freiheit in der reuse-Planung und erleichtert die Einführung von Kleinzellenstrukturen.

Beim erfindungsgemäßen digitalen Funkübertragungverfahren ist kein fester Duplexabstand zwischen Hin- und Rückkanal erforderlich, so daß das Verfahren der dynamischen, flexiblen Kanalzuweisung angewandt werden kann, wobei sich ein kleinerer "effektiver" Gleichkanalwiederholabstand und damit eine größere Netzkapazität erzielen läßt. In Fig. 2 und 3 ist die Frequenzzuweisung in homogenen Netzen (oder homogenen Teilnetzen) dargestellt, wobei die Funkzellen zu Zellgruppen (Cluster), bestehend aus einer Anzahl von Funkzellen, zusammengefaßt werden. In den verschiedenen Zellen einer Zellgruppe werden unterschiedliche Kanalsätze verwendet. Dabei können innerhalb einer Funkzelle auch mehrere Kanalsätze der ortsfesten Funkstation BS zugewiesen sein. Die Verteilung der Kanalsätze in einer Zellgruppe wird räumlich periodisch wiederholt. Mit der Größe der Zellgruppe ist ein bestimmter Gleichkanalwiederholabstand verbunden, wobei beim Netzentwurf der Gleichkanalwiederholabstand und damit auch die Größe der Zellgruppe so zu wählen ist, daß für die Interferenzfreiheit im Netz bestimmte Anforderungen erfüllt werden. Bei einer beispielsweise im digitalen Funkübertragungssystem zur Verfügung stehenden Gesamtbandbreite von 25 MHz können 20 Kanalsätze (mit je 32 Nachrichtenkanälen) mit einer Übertragungsbandbreite von ca. 1,25 MHz gebildet werden. Werden benachbarte Funkzellen durch unterschiedliche Trägerfrequenzen und Gleichkanalzellen durch unterschiedliche Codewörter von einander getrennt, so können in der Breitbandrichtung, d.h. in der Richtung von der ortsfesten Funkstation BS zu den beweglichen Funkstationen MS Zellgruppen mit beispielsweise drei oder vier Funkzellen pro Zellgruppe (vgl. Fig. 2 und Fig. 3) gebildet werden. In den Figuren 2 und 3 sind mit den Ziffern 1 bis 3 unterschiedliche Trägerfrequenzen und mit den Buchstaben A bis D unterschiedliche Codesätze bezeichnet. Bei einer Zellgruppe mit drei Funkzellen der gleichen Trägerfrequenz ergibt sich, bei der Verwendung von drei verschiedenen Codesätzen, in der Zellstruktur eine Frequenz- und Codesatzwiederholung in jeder neunten Funkzelle. Werden, wie in Fig. 3 dargestellt, vier verschiedene Codesätze verwendet, so tritt erst nach jeder zwölften Funkzelle eine Wiederholung der gleichen Frequenz-Code-Kombination auf.

Für die Übertragungsrichtung von den beweglichen Funkstationen MS zu der ortsfesten Funkstation BS kann beispielsweise eine Schmalbandübertragung mit Frequenzkanälen im 25 KHz-Raster vorgesehen sein. In den Funkzellen selbst ist die Frequenzeinteilung nicht fest, vielmehr werden die Frequenzen von der ortsfesten Funkstelle BS frei vergeben.

Fig. 4 zeigt das Blockschaltbild des Sendeteils der ortsfesten Funkstation BS. Der im Basisband übertragene Daten-/Sprachstrom setzt sich folgendermaßen zusammen. Die digitalisierte Sprache jedes einzelnen Kanals wird zunächst in einem Transcoder 1 von PCM auf das für die Funkübertragung erforderliche Übertragungsverfahren mit entsprechend geringerer Bitrate umcodiert. An der Schnittstelle B-B kann eine Datenquelle angeschlossen werden. In einem mit der Datenquelle bzw. den Transcoder 1 verbundenen Kanalcodierer 2 wird eine spezielle Kanalcodierung zum Schutz signifikanter Bits gegen Übertragungsfehler auf dem Übertragungskanal hinzugefügt. Diese Kanalcodierung kann je nach zu übertragendem Dienst unterschiedlich sein. In einem mit dem Kanalcodierer 2 verbundenen Multiplexer 3 wird in den Datenstrom die verbindungsbegleitende Signalisierung und die von einer Synchronisierschaltung 4 herrührende Synchronisationsinformation hinzugefügt. Das TDM-Signal (Time Division Multiplex-Signal) am Ausgang des $\overline{\text{TDM-Multiplexers}}$ 3 enthält also bei der in Fig. 4 dargestellten Ausführungsform vier Sprach-/Datenkanäle, einen verbindungsbegleitenden Signalisierungskanal (für ein TDM-Kanalbündel) sowie die für die Synchronisation in den beweglichen Funkstationen MS erforderlichen Synchronisationsbits. Die Synchronisationsbits werden in das TDM-Signal eingeblendet, wie dies in der P 35 11 430.4 vorgeschlagen ist.

Das TDM-Signal am Ausgang des Multiplexers 3 wird mit den jeweiligen von Codegeneratoren 5 erzeugten Codeworten multipliziert, wobei jeweils zwei Bit zu einem Symbol zusammengefaßt und mit dem gewünschten Code gespreizt werden. Der Codegenerator 5 ist mit einer Steuereinrichtung 15 verbunden und fügt auf Befehl der Steuereinrichtung 15 Synchronisiersymbole anstelle von Datensymbolen in den am Ausgang des Multiplexers 3 auftretenden kontinuierlichen Datenstrom ein. Auf das gespreizte Signal wird ein den Eigenschaften des Funkübertragungskanals angepaßtes Modulationsverfahren angewandt, beispielsweise wird mit dem gespreizten Signal dann die Phase eines aus einem Oszillator 6 stammenden Trägersignals umgetastet, wodurch ein mit der Information und dem Codewort verknüpftes, bei einer niedrigen Zwischenfrequenz moduliertes BPSK (Binary Phase Shift Keying) Signal entsteht. Das modulierte CDM-Signal wird einem Summierer 7 zugeführt, dessen Ausgang mit einem Bandpaßfilter 8 verbunden ist. Acht dieser modulierten CDM-Signale bilden nach Addition und Bandpaßfilterung ein in der Amplitude mehrstufiges Gesamtsignal, das schließlich auf die Endfrequenz umgesetzt wird.

Hierzu ist als Mischoszillator ein Synthesizer 9 vorgesehen, welcher innerhalb des Frequenzbereiches des digitalen Funkübertragungssystems mit entsprechenden Stufen geschaltet werden kann. Der Synthesizer 9 ist nur für die wenigen möglichen Frequenzen der FDM-Stufe (Frequency Division Multiplex-Stufe) ausgelegt. Die Mischung des CDM-Signals mit der entsprechenden vom Synthesizer 9 gelieferten Frequenz erfolgt in einer Einrichtung 10, welche mit einem Bandpaßfilter 11 verbunden ist. Der Ausgang des Bandpaßfilters 11 ist mit einem Leistungsverstärker 12 verbunden und das herausgefilterte und verstärkte Sendesignal gelangt über einen Senderkoppler 13 zur Antenne 14. Bei kleineren ortsfesten Funkstationen BS mit bis zu 32 Nachrichtenübertragungskanälen entfällt der Senderkoppler 13 völlig.

Die Kanal- und Codegeneratoreinstellung, die richtige Auswahl der Kanalcodierung und die Einfügungen von Meldungen in den Organisationsdatenstrom erfolgt mittels der in der ortsfesten Funkstation BS angeordneten Steuereinrichtung 15. Der ausgewählte Funkübertragungskanal kann dabei ein TDM-Kanal in einer CDM-Ebene sein (vgl. P 35 11 430.4).

Fig. 5 zeigt das Blockschaltbild des Empfangsteils der beweglichen Funkstation MS. Das von einer gemeinsamen Sende-/Empfangstenne 16 empfangene Signal gelangt über ein Empfangsfilter eines Duplexers 17 zur Eingangsstufe 18 des Empfängers. Die Anforderungen an das Empfangsfilter des Duplexers 17 sind relativ gering, so daß sich auch für bewegliche Funkstationen MS mit geringer Diensteanforderung, z.B. einfaches Datenfunkgerät, eine kostengünstige Lösung ergibt. In der Eingangsstufe 18 wird das Signal verstärkt und dann mit einer aus einem Synthesizer 19 stammenden Synthesizerfrequenz auf eine Zwischenfrequenz gemischt.

Das Zwischenfrequenzsignal wird einem ZF-Teil 20 zugeführt, in dem eine weitere Verstärkung und Filterung des Signals vorgenommen wird. Auch für den Synthesizer 19 kann wie für den Synthesizer 9 der ortsfesten Funkstation BS ein einfacher Synthesizer verwendet werden, welcher sich kostengünstig realisieren läßt. Im ZF-Teil 20 sind Filter angeordnet, welche die Nachbarkanalselektion zur Abgrenzung gegen benachbarte Breitbandkanäle bzw. zur Unterdrückung von Mischprodukten dienen. Die eigentliche Rauschfilterung erfolgt in Korrelatoren 23 bis 25. Mit dem ZF-Teil 20 ist eine Amplituden-Regelschaltung 21 verbunden, welche das Ausgangssignal des ZF-Teils 20 auf einen ausreichenden Pegel zur Ansteuerung der nachfolgenden Schaltungen anhebt und eine mögliche Übersteuerung dieser Schaltungen verhindert. Die Amplituden-Regelschaltung 21 gleicht unterschiedliche Funkfelddämpfungen und Pegelschwankungen aufgrund von Abschattungen aus, so daß in den nachfolgenden Einrichtungen der beweglichen Funkstation MS eine lineare Verarbeitung durchgeführt werden kann. Die Regelzeitkonstante der Amplituden-Regelschaltung 21 wird im wesentlichen von diesen Abschattungen bestimmt.

Das in der Leistung geregelte ZF-Signal am Ausgang der Amplituden-Regelschaltung 21 wird in einem mit dieser verbundenen Demodulator 22 ins Basisband umgesetzt. Dies kann beispielsweise bei Anwendung einer BPSK-Modulation nach dem Prinzip einer Costasschleife durchgeführt, so daß Frequenz und Phase mit berücksichtigt werden. Mehrdeutigkeiten um ganzzahlige Vielfache von 180° können anhand der Polarität der empfangenen Synchronworte (vgl. P 35 11 430.4) erkannt und entsprechend ausgeglichen werden.

Mit dem Demodulator 22 sind drei Korrelatoren 23, 24 und 25 verbunden, welche von einer Steuereinrichtung 26 auf die gerade gültigen Codes 1 und 2 und auf einen in der Funkzone für das gesamte Kanalbündel gültigen Synchroncode eingestellt werden. Mittels der Steuereinrichtung 26 wird der empfangene Organisationsdatenstrom ausgewertet, indem die Daten der von dem Teilnehmer gewünschten Dienste und die Daten für die Geräteart vorgesehenen Funkübertragungskanäle ausgelesen werden, ein im Organisationsdatenstrom als frei ausgewiesener und auch im in der beweglichen Funkstation MS schaltbarer Funkübertragungskanal auswählt wird und anschließend ein Zugriffssignal auf diesem ausgewählten Funkübertragungskanal zur ortsfesten Funkstation BS gesendet wird.

Das Ausgangssignal der Korrelatoren 23 bis 25 wird einerseits zur Ableitung von Symboltakt, Rahmentakt sowie Bittakt verwendet anderseits wird dieses zur Vermessung des augenblicklich gültigen Mehrwegeprofils herangezogen. Da ein einheitlicher Synchroncode mit entsprechend größerem Pegel in dem gesamten Kanalbündel zum gleichen Zeitpunkt abgestrahlt wird (vgl. P35 11 430.4) ergibt sich eine sichere Synchronisationserkennung und Vermessung des Mehrwegeprofils.

Die Ausgänge der Korrelatoren 24 und 25 sind mit Abtastschaltungen 27, 28 verbunden, welche die Ausgangssignale der Korrelatoren 24 und 25 abtasten und das jeweilig Ergebnis einer Entscheidungsstufe 29 zuführen. Dabei werden die Ergebnisse der synchron zu den Echos der Mehrwegeausbreitung ablaufenden Abtastungen in der Entscheidungsstufe 29 proportional zur Amplitude der Echos (mittels einer Einrichtung 30) gewichtet. Die Entscheidungsstufe 29 hat die Aufgabe, den gesendeten Code und die Polarität des Codes zu schätzen. Der Schätzwert gestattet somit die Auswahl des mit der größten Wahrscheinlichkeit gesendeten Symbols. Nach der Symbol-Bit-Umwandlung in der Entscheidungsstufe 29 wird das Ausgangssignal einem mit der Entscheidungsstufe 29 verbundenen TDM-Demultiplexer 31 zugeführt. Der Demultiplexer 31 ist mit einem Kanal-Decodierer 32 verbunden an dessen Ausgang der gesendete Datenstrom wieder zur Verfügung steht. Bei digitaler Sprachübertragung wird in einem Sprachdecoder 33 das digitale Sprachsignal decodiert, einem D/A-Wandler und einem mit diesem verbundenen Lautsprecher zugeführt.

Ist in der beweglichen Funkstation MS beispielsweise die Dienstart Datendienst realisiert, so können die am Ausgang des Kanaldecodieres 32 auftretenden Daten sofort z.B. angezeigt oder ausgedruckt werden.

**Patentansprüche**

1. Übertragungsverfahren für ein digitales Funkübertragungssystem mit in einem Zellularnetz angeordneten ortsfesten Funkstationen (BS) und mit einer Vielzahl voneinander unabhängiger beweglicher Funkstationen (MS), welche zur Nachrichtenübertragung auf einen aus einer Vielzahl von Nachrichrichtenkanälen zugreifen, dadurch gekennzeichnet, daß in den beiden Übertragungsrichtungen für die Bündelung von Nachrichtenkanälen unterschiedliche Kombinationen von Multiplexverfahren angewandt werden, wobei, für die Übertragungsrichtung von der ortsfesten Funkstation (BS) zu den beweglichen Funkstation (MS), in der ortsfesten Funkstation (BS) die zu sendende Nachricht in die Nachrichtenkanäle (Kanalkennung X.Y.Z) unter Anwendung der Kombination von Codemultiplex-, Zeitmultiplex- und Frequenzmultiplexverfahren (TDM-Multiplexer 3, Codewortgenerator 5, Synthesizer 9) eingefügt wird und in der beweglichen Funkstation (MS) die Trennung der Nachrichtenkanäle des empfangenen Digitalsignals unter Anwendung des Codemultiplex-, Zeitmultiplex- und Frequenzmultiplexverfahrens (Synthesizer 19, Korrelatoren 24 und 25, TDM-Demultiplexer 31) erfolgt.

2. Übertragungsverfahren nach Anspruch 1, dadurch gekennzeichnet, daß für die Übertragungsrichtung von den beweglichen Funkstationen (MS) zur ortsfesten Funkstation (BS) die Nachrichtenübertragung in voneinander getrennten, schmalbandigen Frequenzkanälen oder in Zeitkanälen oder in voneinander getrennten Codeebenen oder deren Kombinationen erfolgt.

3. Übertragungsverfahren nach Anspruch 1, dadurch gekennzeichnet, daß in der ortsfesten Funkstation (BS) die Bündelung der Nachrichtenkanäle in der Reihenfolge Zeitmultiplex-, Codemultiplex- und Frequenzmultiplexverfahren und in der beweglichen Funkstation (MS) die Trennung der Nachrichtenkanäle in der umgekehrten Reihenfolge durchgeführt wird.

4. Übertragungsverfahren nach Anspruch 1, dadurch gekennzeichnet, daß bei ortsfesten Funkstationen (BS) mit vergleichsweise niedrigen Kapazitätsbedarf die Bündelung von Nachrichtenkanälen innerhalb einer Funkzelle unter Anwendung des Codemultiplex- und Zeitmultiplexverfahrens vorgenommen wird.

5. Übertragungsverfahren nach Anspruch 1, dadurch gekennzeichnet, daß bei ortsfesten Funkstationen (BS) mit vergleichsweise sehr geringem Kapazitätsbedarf die Bündelung der Nachrichtenkanäle innerhalb einer Funkzelle nur durch Anwendung des Zeitmultiplexverfahrens erfolgt.

6. Übertragungsverfahren nach Anspruch 1, dadurch gekennzeichnet, daß in der ortsfesten Funkstation (BS) beliebige Kombinationen von Codemultiplex-und Zeitmultiplexkanälen auf eine Trägerfrequenz umgesetzt werden.

**Claims**

1. Transmission method for a digital radio transmission system comprising in a cellular network base stations (BS) and a multiplicity of mutually independent mobile stations (MS), which have access to a multiplicity of communication channels for the transmission of messages, characterized in that different combinations of multiplex methods are used in both directions of transmission for combining communication channels, whereby for the direction of transmission from the base station (BS) to the mobile station (MS) the message to be transmitted is inserted by the base station (BS) into the communication channels (channel code X.Y.Z) by using a combination of the code-division multiplex, time-division multiplex and frequency-division multiplex methods (TDM multiplexer 3, codeword generator 5, synthesizer 9), and in the mobile station (MS) the communication channels of the received digital signal are separated with the aid of the code-division multiplex, time-division multiplex and frequency-division multiplex methods (synthesizer 19, correlators 24 and 25, TDM demultiplexer 31).

2. Transmission method as claimed in Claim 1, characterized in that for the direction of transmission from the mobile stations (MS) to the base station (BS) the messages are transmitted over separated narrow-band frequency channels or over time-division channels or over separated code-division channels or a combination thereof.

3. Transmission method as claimed in Claim 1, characterized in that the communication channels are combined in the base station (5) in the order of the time-division multiplex, code-division multiplex and frequency-division multiplex methods, and are separated in reverse order in the mobile station (MS).

4. Transmission method as claimed in Claim 1, characterized in that in base stations (BS) with comparatively low capacity requirements the communication channels are combined within a radio cell while the code-division multiplex and time-division multiplex methods are used.

5. Transmission method as claimed in Claim 1, characterized in that in base stations (BS) with comparatively very low capacity requirements the communication channels are combined within a radio cell while only the time-division multiplex method is used.

6. Transmission method as claimed in Claim 1, characterized in that in the base station (BS) arbitrary combinations of code-division multiplex and time-division multiplex channels are converted to one carrier frequency.

**Revendications**

1. Procédé de transmission pour un système de transmission radio numérique comportant des postes de radio fixes (BS) installés dans un réseau cellulaire et une pluralité de postes de radio mobiles (MS) indépendants les uns des autres, qui, pour la transmission de messages, accèdent à l'un d'une pluralité de canaux à messages, caractérisé en ce que, dans les deux sens de transmission, on utilise des combinaisons de multiplexages différentes pour le groupage de canaux à messages, étant entendu que, pour le sens de transmission allant du poste de radio fixe (BS) vers les postes de radio mobiles (MS), dans le poste de radio fixe (BS), le message à émettre est introduit dans les canaux à messages (identification de canal X.Y.Z) par application de la combinaison du multiplexage codé, du multiplexage temporel et du multiplexage fréquentiel (multiplexeur TDM 3, générateur de mots de code 5, synthétiseur 9) et que, dans le poste de radio mobile (MS), la séparation des canaux à messages du signal numérique reçu s'effectue par application du multiplexage codé, du multiplexage temporel et du multiplexage fréquentiel (synthétiseur 19, corrélateurs 24 et 25, démultiplexeur TDM 31).

2. Procédé de transmission suivant la revendication 1, caractérisé en ce que, pour le sens de transmission allant des postes de radio mobiles (MS) vers le poste de radio fixe (BS), la transmission des messages s'effectue dans des canaux de fréquences à bande étroite séparés les uns des autres ou dans des canaux temporels ou dans des plans de codes ou leurs combinaisons séparés l'un de l'autre.

3. Procédé de transmission suivant la revendication 1, caractérisé en ce que, dans le poste de radio fixe (BS), le groupage des canaux à messages est effectué dans l'ordre multiplexage temporel, multiplexage codé et multiplexage fréquentiel, tandis que, dans le poste de radio mobile (MS), la séparation des canaux à messages est effectuée dans l'ordre inverse.

4. Procédé de transmission suivant la revendication 1, caractérisé en ce que, dans le cas de postes de radio fixes (BS) à demande de capacité relativement faible, le groupage de canaux à messages est effectué à l'intérieur d'une cellule radio par application du multiplexage codé et du multiplexage temporel.

5. Procédé de transmission suivant la revendication 1, caractérisé en ce que, dans le cas de postes de radio fixes (BS) à demande de capacité relativement très faible, le groupage des canaux à messages à l'intérieur d'une cellule radio ne peut être effectué que par application du multiplexage temporel.

6. Procédé de transmission suivant la revendication 1, caractérisé en ce que, dans le poste de radio fixe (BS), des combinaisons quelconques de canaux à multiplexage codé et de canaux à multiplexage temporel sont converties sur une fréquence porteuse.

FIG.1

FIG. 2

FIG. 3

FIG. 4

FIG. 5